Europäisches Patentamt

European Patent Office

Office européen des brevets

(11) Publication number: **0 331 302**
**A1**

## (12) EUROPEAN PATENT APPLICATION

(21) Application number: **89301321.9**

(22) Date of filing: **13.02.89**

(51) Int. Cl.⁴: **A01C 15/04 , A01C 7/08**

(30) Priority: **27.02.88 GB 8804660**

(43) Date of publication of application:
**06.09.89 Bulletin 89/36**

(84) Designated Contracting States:
**DE ES FR GB IT NL**

(71) Applicant: **Massey-Ferguson Manufacturing
Limited
33/35 Davies Street
London W1Y 2EA(GB)**

(72) Inventor: **Bailey, Alfred John
Lavender Hall Lane
Berkswell nr.Coventry CV7 7BL(GB)**

(74) Representative: **Morrall, Roger et al
Varity Holdings Ltd., Patent Department
Stareton near Kenilworth Warwickshire CV8
2LJ(GB)**

(54) **Pneumatic drills and fertilizer spreaders.**

(57) An agricultural seed drill or fertilizer spreader of the pneumatic type in which a fan (11) produces a flow of air to distribute seed and/or fertilizer to a plurality of dispensing units (7). The drill or spreader includes a vacuum cleaning system (20, 21, 23, 33) which employs the existing fan (11) to produce suction to remove unwanted seed or fertilizer from the drill or spreader. In one form of the invention the vacuum cleaning system includes an air suction pipe (21, 23) coupled to an air inlet (22) of the fan (11) via a blanking member (33) which extends over the inlet. The blanking member (33) may be held in position over the inlet by the suction action of the fan (11) or a support structure (32) may be provided which allows movement of the blanking members towards and away from the inlet (22). The vacuum cleaning system preferably includes a recepticle (20) for seed or fertilizer, the recepticle having an air inlet (24) connected with one portion (23) of the suction pipe and an air outlet (30) connected via another portion (21) of the auction pipe with the fan inlet (22). An air filter (28) is located within the recepticle between the recepticle inlet and outlet to prevent seed, fertilizer or debris being drawn through the recepticle into the fan (11).

## PNEUMATIC DRILLS AND FERTILIZER SPREADERS

Technical Field

This invention relates to agricultural drills and fertilizer spreaders of the pneumatic type that incorporate a fan to produce a flow of air in which to distribute seed and fertilizer.

Agricultural drills and fertilizer spreaders need to be cleaned when changing the type of seed to be sown so as to avoid sowing mixed seed and also before storing the machine so as to avoid corrosion and seizing of the seed dispensing mechanisms. This task can be difficult and time consuming and is normally done on farm premises where special equipment and power supplies are available.

Disclosure of the Invention

It is an object of the present invention to provide a pneumatic drill or fertilizer spreader which mitigates the above difficulties.

Thus according to the present invention there is provided a pneumatic drill or fertilizer spreader with a vacuum cleaning system that employs the existing fan to produce suction to remove unwanted seed and fertilizer from the drill or spreader.

As will be appreciated, such a cleaning system can be readily incorporated into existing machines at low cost and would be permanently available for cleaning of the machines in any situation.

The vacuum cleaning system may comprise an air suction pipe coupled to an air inlet of the fan. The air suction pipe may be coupled to the air inlet of the fan via a blanking member which extends over the inlet.

The blanking member may be held in position over the inlet by the suction action of the fan or may be supported via a structure which allows movement of the blanking member towards and away from the fan inlet.

The vacuum cleaning system may include an air filter to prevent seed, fertilizer or debris being drawn into the fan.

The vacuum cleaning system a may also include a recepticle for seed or fertilizer, the recepticle having an air inlet connected with one portion of the suction pipe and an air outlet connected via another portion of the suction pipe with the fan inlet, the air filter being located within the recepticle between the recepticle inlet and outlet to prevent seed, fertilizer or debris being drawn through the recepticle into the fan.

Description of the Drawings

The invention will now be described by way of example with reference to the accompanying drawings in which:

Figure 1 is a schematic side elevation of a pneumatic drill according to the invention,

Figure 2 is a more detailed schematic diagram of the vacuum cleaning system in Figure 1,

Figure 3 is a schematic diagram of an alternative blanking member arrangement for use in a vacuum cleaning system for use in a pneumatic drill,

Figure 4 is a schematic diagram of an alternative filtering and recepticle unit, and

Figures 5 and 6 are schematic diagrams showing side and end views of part of a still further form of filtering and recepticle unit.

Best Mode of Carrying Out Invention

The illustrated drill comprises a frame 1 carrying a seed hopper 2. A plurality of seed metering mechanisms 3 dispense seed from the hopper into pneumatic distribution means 4 that conveys the seed in a flow of air to each of a plurality of coulters 5 pivotally mounted on the frame. The seed metering mechanisms 3 are mounted in two rows across the width of the hopper, one beneath each inclined bottom wall 6 of the hopper, and each delivers seed into the pneumatic distribution means comprising a venturi unit 7 and a length of tube 8 connecting the unit 7 to an associated coulter 5. The venturi units 7 are connected to a common air manifold 9 that is pressurised via a duct 10 by a fan 11 that is mounted on the forward facing wall 12 of the hopper 2.

Tractor mounting points 13 are provided on the front of the frame 1 for connection of the drill to the rear lifting links of a trctor. A pair of landwheels 14 are mounted on the frame so as to support the drill when it is lowered onto the ground for work, and a transmission system 15 between the landwheels and the metering mechanisms serves to drive the latter and dispense seed.

A rotable control beam 16 is supported from the frame 1 and extends laterally across the width of the drill. Each coulter 5 comprises an arm 17 that is pivotally connected at its forward end to the beam 16 and is pulled downwards into working engagement with the soil by a tension spring 18 connected between the arm 17 and beam 16. An hydraulic ram 19 is connected between the beam 16 and frame 1 and serves to rotate the beam 16 to urge the coulters downwards into work, the sowing depth of the coulters being determined by the stroke of the ram.

A vacuum cleaning system in accordance with the present invention is mounted on the front wall 12 of the hopper 2 and comprises an air filtering and seed recepticle unit 20 connected to the wall 12 and air suction pipes 21 and 23. Suction pipe 21 connects an air outlet 30 of the filtering and recepticle unit 20 with a screened air inlet 22 of the fan 11, suction pipe 23 acts as a flexible cleaning hose connected to an air inlet 24 of unit 20.

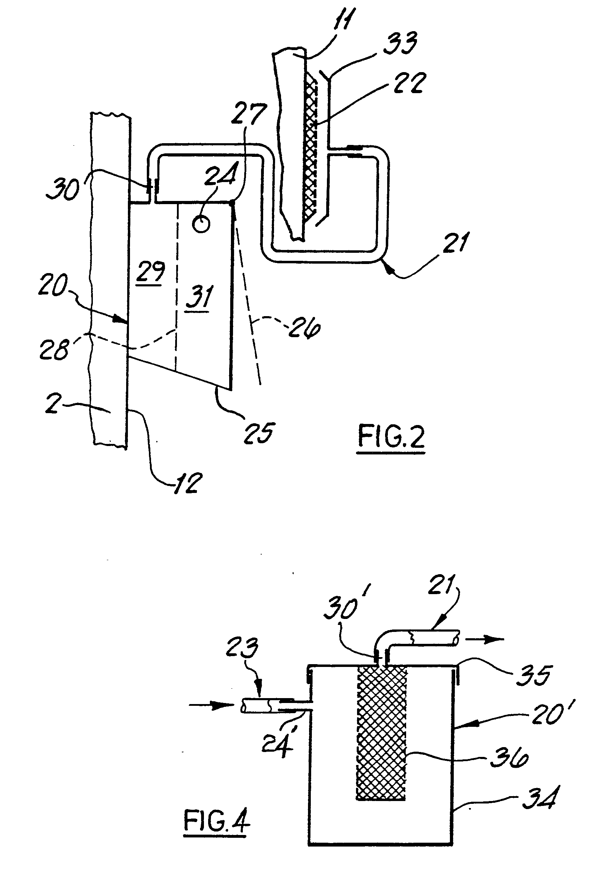

As shown in Figure 2, the filtering and recepticle unit 20 comprise a closed housing having a floor 25 that slopes forwards and downwards away from the hopper wall 12, and a front door or hatch 26 that is hinged along its top edge 27 and which opens forwards to allow any seed accumulated on the floor 25 to fall out. A removable filter screen 28 is mounted vertically within the unit 20 to divide it internally into a rear space 29 with the air outlet 30 in the top wall and a forward space 31 with the air inlet 24 in a side wall of the unit near the top.

Thus, air sucked into the unit via the hose 23 passes through the screen 28 and deposits any seed contained in the air in the forward space 31. As will be appreciated, the fall in velocity of the air on entering unit 20 leads to the falling from suspension of any seed, fertilizer or debris which is drawn into unit 20 via hose 23. Filter screen 28 is thus an added safety arrangement to ensure that no seed, fertilizer or debris passes on into the fan.

The suction pipe 21 comprises a flexible hose with one end connected to the air outlet 30 of unit 20 and the other end connected to a blanking member 33. When the blanking member is positioned in its cleaning position over the air inlet 22, the suction effect of the fan as it draws air through the air inlet 22 causes the blanking member to seal over and around the inlet 22, thereby causing air to be drawn through pipe 21, the unit 20 and the cleaning hose 23. The hose 23 can therefore be used to remove seed or other loose material by suction from the hopper and mechanisms of the drill that need cleaning.

In a preferred arrangement the blanking member 33 is manually located over the air inlet 22 or removed as required. Air suction alone may be sufficient to hold the blanking member in place, or some form of simple releasable fastening may be provided. The blanking member may cover all or only part of the air inlet depending on the suction characteristics of the fan and may be flexible and made of rubber or plastic material or rigid and made, for example, of metal.

In an alternative arrangement shown in Figure 3, a support structure in the form of a metal pipe 32, which is connected with pipe 21, is welded or otherwise secured to the centre of the fan inlet 22 and the blanking member 33 is slidable towards and away from the inlet on the pipe 32 to give, for example, a working position of the blanking member shown in full lines when the blanking menber is over the inlet 22 and suction is applied to pipe 21 and a non-working position shown in dotted detail 33' where the blanking member is spaced away from the inlet 22 and no suction is applied to pipe 21.

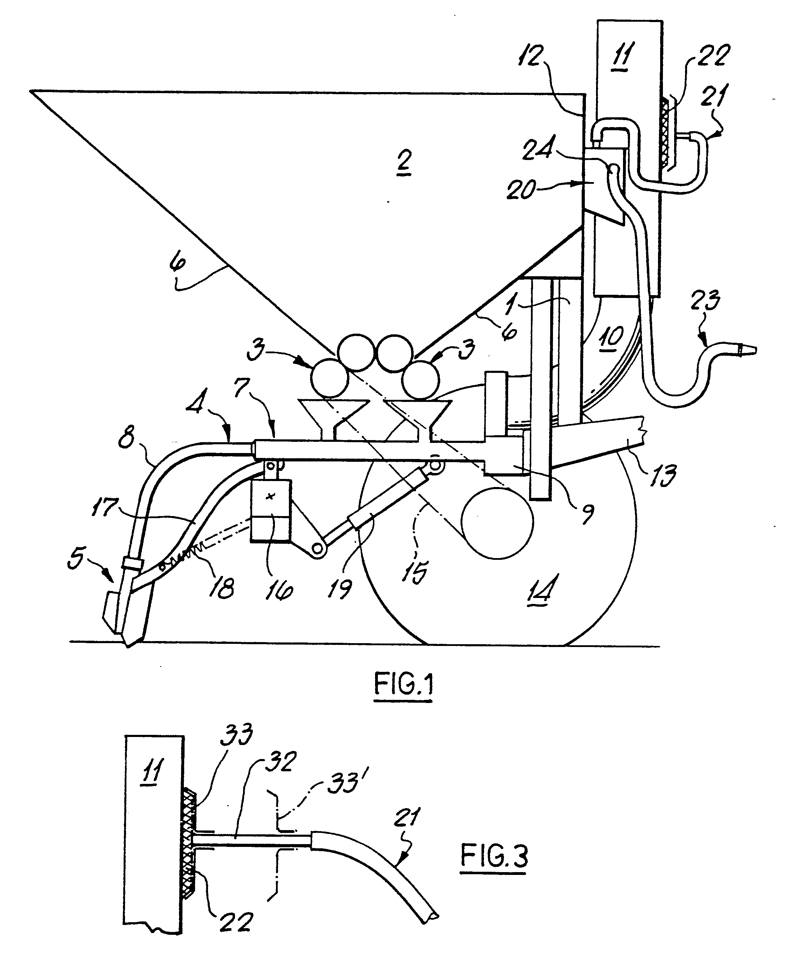

Figure 4 illustrates an alternative form of filtering and recepticle unit 20 that can be used in place of the unit 20 in Figures 1 and 2, and which comprises an outer casing 34 with an air inlet 24' in its side wall near the top and a removable lid 35 having a filter element 36 connected to it centrally and an air outlet 30' that communicates with the container through the filter element 36. Seed filtered from the air as it is sucked through the container 20' collects on the filter 36 and in the bottom of the container and is removed periodically by opening the lid and emptying the container.

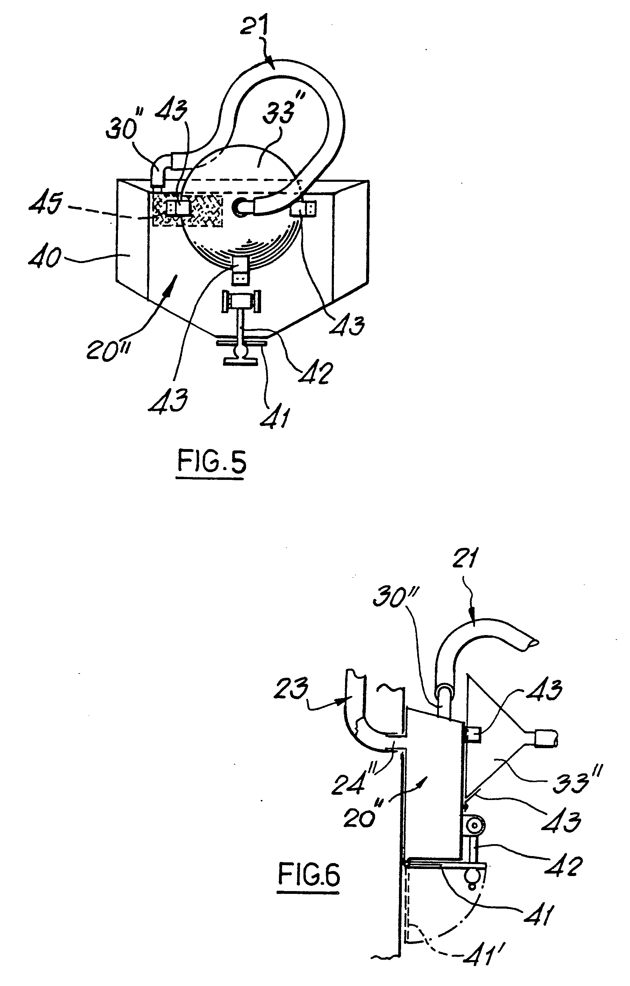

Figures 5 and 6 illustrate a further form of filtering and recepticle unit 20" that can be used in place of the unit 20 in Figures 1 and 2 and which comprises an outer casing 40 whose base tapers downwards towards a central pivotting hatch 41 which is held closed by a fastener 42. The unit 20" has an air inlet 24" which extends through the hopper wall 12 and is connected with suction pipe 23 to provide a convenient provision of suction within the hopper. The outlet 30" of unit 20" is connected with pipe 21 and the blanking member 33" which is of conical form and can be stored on the side of casing 40 within support brackets 43 when not held in use over the inlet 22. A filter 45 is provided within casing 44 to prevent the passage of seed, fertilizer or debris out through outlet 30" to the fan.

As will be appreciated, the unit 20" can be emptied by disengaging fastener 42 from a slot in the hatch 41 and allowing the hatch to pivot downwards to its open position shown by dotted detail 41' in Figure 6.

## Claims

1) An agricultural seed drill or fertilizer spreader of the pneumatic type in which a fan (11) produces a flow of air to distribute seed and/or fertilizer to a plurality of dispensing units (7), the drill or spreader being characterised by the provision of a vacuum cleaning system (20, 21, 23, 33) which employs the fan (11) to produce suction to remove unwanted seed or fertilizer from the drill or spreader.

2) A drill or spreader according to Claim 1 characterised in that the vacuum cleaning system (20, 21, 23, 33) comprises an air suction pipe (21, 23) coupled to an air inlet (22) of the fan (11).

3) A drill or spreader according to Claim 2 characterised in that the air suction pipe (21, 23) is coupled to the air inlet (22) of the fan (11) via a blanking member (33) which extends over the inlet.

4) A drill or spreader according to Claim 3 characterised in that the blanking member (33) is held in position over the inlet by the suction action of the fan (11).

5) A drill or spreader according to Claim 3 characterised in that the blanking member (33) is supported via a support structure (32) which allows movement of the blanking member between a position over the inlet (22) in which suction is applied to the vacumn cleaning system (20, 21, 23, 33) and a position away from the inlet in which no suction is applied to the vacumn cleaning system.

6) A drill or spreader according to any one of Claims 1 to 5 characterised by the inclusion in the vacuum cleaning system (20, 21, 23, 33) of an air filter (28) to prevent seed, fertilizer or debris being drawn into the fan (11).

7) A drill or spreader according to Claim 6 characterised in that the vacuum cleaning system ((20, 21, 23, 33) includes a recepticle (20) for seed or fertilizer, the recepticle having an air inlet (24) connected with one portion (23) of the suction pipe and an air outlet (30) connected via another portion (21) of the suction pipe with the fan inlet (22), the air filter (28) being located within the recepticle between the recepticle inlet and outlet to prevent seed, fertilizer or debris being drawn through the recepticle into the fan (11).

8) A drill or spreader according to Claim 7 characterised in that the recepticle (20 : 20″) includes a pivotable hatch (26 : 41) through which the recepticle can be emptied.

9) A drill or spreader according to Claim 8 characterised in that the base (25) of the recepticle (20) slopes to assist discharge of seed a fertilizer through the hatch (26).

10) A drill or spreader according to Claims 7, 8 or 9 characterised in that the recepticle (20″) carries a support means (43) for storage of the blanking member (33″) when not in use.

FIG.1

FIG.3

FIG.2

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | EP-A-150833 ( AMAZONEN - WERKE ) <br> * page 5, line 16 - page 10, line 28; figures 1, 2, 7, 8 * <br> --- | 1, 2, 6, 7 | A01C15/04 <br> A01C7/08 |
| X | EP-A-100723 ( LACAILLE ) <br> * page 6 - 10; figure 2 * <br> --- | 1, 2, 6, 7 | |
| X | EP-A-50829 ( INSTITUT TECHNIQUE DES CEREALES ET DES FOURRAGES ) <br> * page 3, line 18 - page 8; figure 2 * <br> ----- | 1, 2 | |
| | | | TECHNICAL FIELDS SEARCHED (Int. Cl.4 ) <br><br> A01C |

The present search report has been drawn up for all claims

| Place of search | Date of completion of the search | Examiner |
|---|---|---|
| THE HAGUE | 29 MAY 1989 | VERMANDER R.H. |